(19) Europäisches Patentamt
European Patent Office
Office européen des brevets

(11) **EP 3 767 385 A1**

(12) **EUROPEAN PATENT APPLICATION**
published in accordance with Art. 153(4) EPC

(43) Date of publication:
**20.01.2021 Bulletin 2021/03**

(51) Int Cl.:
**G02F 1/17** (2019.01)

(21) Application number: **19767267.8**

(22) Date of filing: **12.03.2019**

(86) International application number:
**PCT/JP2019/010120**

(87) International publication number:
**WO 2019/176969 (19.09.2019 Gazette 2019/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.03.2018 JP 2018050212**

(71) Applicant: **NITTO DENKO CORPORATION
Ibaraki-shi
Osaka 567-8680 (JP)**

(72) Inventors:
• **WATANABE, Kenta**
  **Ibaraki-shi, Osaka 567-8680 (JP)**
• **TAKEMOTO, Hiroyuki**
  **Ibaraki-shi, Osaka 567-8680 (JP)**
• **SUGINO, Akiko**
  **Ibaraki-shi, Osaka 567-8680 (JP)**

(74) Representative: **Grünecker Patent- und
Rechtsanwälte
PartG mbB
Leopoldstraße 4
80802 München (DE)**

(54) **GASCHROMIC LIGHT CONTROL ELEMENT**

(57) A gaschromic light-modulation element (100) according to the present invention includes a light-modulation substrate (1) having a light-modulation portion (30) on one principal surface of a first transparent substrate (10); and a second transparent substrate (5) which is arranged so as to face the light-modulation part of the light-modulation substrate. The light-modulation portion includes a light-modulation layer, the light transmittance of which is reversibly changed by hydrogenation and dehydrogenation. At least one of the first transparent substrate and the second transparent substrate is flexible. A plurality of dot-shaped spacers are arranged between the light-modulation part and the second transparent substrate. It is preferable that the number density of the spacers is 70 to 15000 pieces/m$^2$.

FIG. 1

**Description**

TECHNICAL FIELD

The present invention relates to a light-modulation element which is capable of switching light transparent state by hydrogenation and dehydrogenation of light-modulation material.

BACKGROUND ART

Light-modulation elements are used for window panes of buildings and vehicles, interior materials, and the like. Particularly in recent years, demand and expectation for light-modulation elements have been increased from the viewpoints of reducing a cooling and heating load, reducing a lighting load, improving comfort, and so on.

A hydrogen-activation-type light-modulation element which switches between transmission and reflection or absorption of light by hydrogenation and dehydrogenation of a light-modulation material is suitable for area increase and cost reduction because the switching can be performed by a gas chromic system. A gas chromic light-modulation element generally has a structure in which one of a pair of glass plates is replaced by a light-modulation substrate, and a light-modulation material is hydrogenated and dehydrogenated by supplying a gas such as hydrogen to a gap between the two substrates and discharging the gas from the gap.

The light-modulation substrate includes a glass substrate, and a light-modulation portion on the glass substrate, the light-modulation portion including a light-modulation layer formed of a light-modulation material. By disposing another glass substrate so as to face the light-modulation portion of the light-modulation substrate, a gap (gas-filling space) is provided between the two substrates (e.g. Patent Document 1). Patent Document 2 discloses a light-modulation element including a flexible light-modulation substrate in which a light-modulation layer and a catalyst layer are provided as a light-modulation portion on a film substrate. Since a film substrate enables a light-modulation portion to be formed by a continuous deposition method such as roll-to-roll sputtering, area increase and cost reduction of light-modulation elements can be expected.

The gas chromic light-modulation elements disclosed in Patent Documents 1 and 2 have two substrates disposed at a predetermined interval to secure a gas-filling space. Thus, the thickness of the light-modulation element increases, so that applicability is limited. In addition, since a gap (gas-filling space) between the two substrates has a large volume, it takes much time to hydrogenate and dehydrogenate the light-modulation material, and there are problems of a low switching speed, and the like.

Patent Document 3 discloses a light-modulation element in which another substrate (counter substrate) is disposed so as to partially contact a light-modulation portion of a light-modulation substrate. Patent Document 3 suggests that in the light-modulation element with the counter substrate disposed so as to contact the light-modulation portion of the light-modulation substrate, a gap is formed between the light-modulation portion and the counter substrate by very fine irregularities on the surface, so that a gas supply passage for hydrogen etc., and therefore switching by a gas chromic system is possible even in an area where the light-modulation portion is in contact with the counter substrate.

PRIOR ART DOCUMENTS

PATENT DOCUMENTS

Patent Document 1: Japanese Patent Laid-open Publication No. 2013-83911
Patent Document 2: Japanese Patent Laid-open Publication No. 2016-218445
Patent Document 3: Japanese Patent Laid-open Publication No. 2014-134676

SUMMARY OF THE INVENTION

PROBLEMS TO BE SOLVED BY THE INVENTION

As described in Patent Document 3, a light-modulation element with two substrates disposed so as to contact each other can be downsized. In addition, since the gas-filling space has a small volume, there is an advantage that the switching speed between hydrogenation and dehydrogenation by supplying and discharging a gas can be improved.

However, studies by the inventors have revealed that formation of a light-modulation element with another substrate (counter substrate) disposed so as to contact a light-modulation portion using a film light-modulation substrate has the problem that in some regions, a light-modulation layer is not hydrogenated or dehydrogenated by supplying or discharging an atmospheric gas, and thus light-modulation properties in the surface are non-uniform.

MEANS FOR SOLVING THE PROBLEMS

The inventors have conducted studies on the reason why light-modulation is locally hindered when a film substrate is used, and as a result, it has been revealed that a light-modulation portion on the surface of a light-modulation substrate contacts a counter substrate to cause blocking, so that an atmospheric gas is unable to contact the surface of the light-modulation portion, resulting in hindrance of light-modulation. In view of the finding, a gas chromic light-modulation element of the present invention includes a dot-shaped spacer between the substrates.

The gas chromic light-modulation element includes a light-modulation substrate having a light-modulation portion arranged on one principal surface of a first transparent substrate, and a second transparent substrate disposed so as to face the light-modulation portion of the light-modulation substrate. The light-modulation portion has a light-modulation layer whose light transmittance is reversibly changed by hydrogenation and dehydrogenation. The light-modulation layer is preferably a metal thin-film. Examples of the metal that forms the light-modulation layer include rare earth metals, alloys of rare earth metals and magnesium, alloys of alkaline earth metals and magnesium, and alloys of transition metals and magnesium. The light-modulation portion may include a catalyst layer which promotes hydrogenation and dehydrogenation of the light-modulation layer.

At least one of the first transparent substrate and the second transparent substrate is flexible. From the viewpoint of productivity of the light-modulation substrate, it is preferable that the first transparent substrate is flexible. Both the first transparent substrate and the second transparent substrate may be flexible.

A plurality of dot-shaped spacers are arranged between the light-modulation portion of the light-modulation substrate and the second transparent substrate. It is preferable that the spacer is fixed on a principal surface of the light-modulation substrate or the second transparent substrate, and it is preferable that the spacer is fixed on the principal surface of the second transparent substrate.

From the viewpoint of suppressing light-modulation failure resulting from blocking, the number density of the spacers arranged between the light-modulation portion and the second transparent substrate is preferably 70 pieces/$m^2$ or more. From the viewpoint of suppressing white turbidity of transmitted light in the transparent state of the light-modulation element, the number density of the spacers is preferably 15000 pieces/$m^2$ or less. The height of the spacer is preferably 10 to 5000 $\mu$m. The projected area circle equivalent diameter of the spacer is preferably 30 to 1000 $\mu$m.

EFFECTS OF THE INVENTION

The gas chromic light-modulation element enables improvement of the switching speed between a light transmission state and a light-shielding state by hydrogenation and dehydrogenation because the gas-filling space has a small volume. In addition, since a plurality of dot-shaped spacers are arranged between the two substrates, it is possible to suppress light control failure resulting from blocking.

BRIEF DESCRIPTION OF THE DRAWINGS

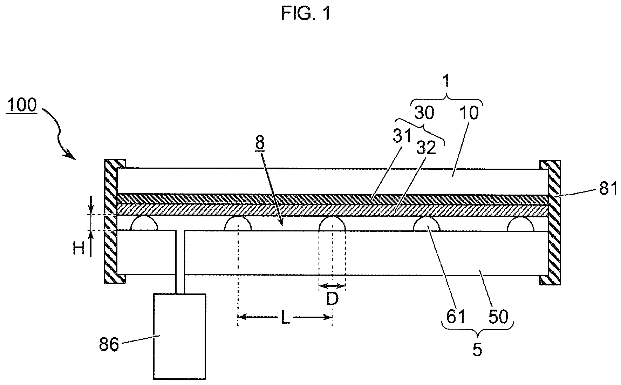

FIG. 1 is a sectional view of a gas chromic light-modulation element of one embodiment.

MODE FOR CARRYING OUT THE INVENTION

A light-modulation element of the present invention includes a first transparent substrate and a second transparent substrate. At least one of the first transparent substrate and the second transparent substrate is a flexible substrate. Both the first transparent substrate and the second transparent substrate may be flexible substrates. A light-modulation portion having a light-modulation layer whose optical characteristics are reversibly changed by hydrogenation or dehydrogenation is arranged on the first substrate to form a light-modulation substrate.

The second transparent substrate is disposed so as to face the light-modulation portion of the light-modulation substrate, and a plurality of dot-shaped spacers are arranged between the light-modulation portion and the second transparent substrate. Since the spacers are provided, a space is formed between the light-modulation portion and the second transparent substrate, and the light-modulation layer is hydrogenated and dehydrogenated by supplying hydrogen etc. to the space (gas-filling space) or discharging the hydrogen etc. from the space. Since the spacers are provided, blocking between the light-modulation portion and the second transparent substrate is suppressed. Thus, a gas-filling space is secured on the surface of the light-modulation portion over the entire surface of the light-modulation element, so that it is possible to improve in-plane uniformity of the light transmission amount.

FIG. 1 is a sectional view of a light-modulation element according to one embodiment of the present invention. The light-modulation element 100 includes a light-modulation substrate 1 having a light-modulation portion 30 arranged on a flexible transparent substrate 10 as a first transparent substrate, and a counter substrate 5 having a plurality of dot-shaped spacers 61 arranged on a second transparent substrate 50. The light-modulation substrate 1 and the counter substrate 5 are arranged in such a manner that the light-modulation portion 30 of the light-modulation substrate 1 faces the spacer 61 of the counter substrate 5. The light-modulation portion 30 and the spacer 61 may be in contact with each other.

[Light-Modulation Substrate]

The light-modulation substrate 1 has a light-modulation portion 30 on one principal surface of the flexible transparent substrate 10. The light-modulation portion 30 includes a light-modulation layer 31 whose light transmission state is changed by hydrogenation and dehydrogenation. The light-modulation portion 30 may include an additional layer such as a catalyst layer 32 in addition to the light-modulation layer 31.

<Flexible Transparent Substrate>

From the viewpoint of increasing the amount of light transmitted through the light-modulation substrate in a state in which the light-modulation layer 31 is hydrogenated, the visible light transmittance of the flexible transparent substrate 10 is preferably 80% or more, more preferably 85% or more, further preferably 90% or more. A transparent plastic material is preferably used as the flexible transparent substrate 10. Examples of the transparent plastic material include polyesters such as polyethylene terephthalate, polyolefins, cyclic polyolefins such as norbornene-based cyclic polyolefins, polycarbonate, polyether sulfone, and polyarylates. Flexible glass (glass film) may be used for the flexible transparent substrate 10.

The thickness of the flexible transparent substrate 10 is not particularly limited. The thickness is generally about 2 to 500 $\mu$m, and is preferably about 20 to 300 $\mu$m. A surface of the flexible transparent substrate 10 may be provided with an easily adhesive layer, an antistatic layer, a hard coat layer and the like. In addition, a surface of the flexible transparent substrate 10 may be subjected to an appropriate adhesion treatment such as a corona discharge treatment, an ultraviolet irradiation treatment, a plasma treatment, sputtering etching treatment or the like for improving adhesion with the light-modulation portion 30.

<Light-Modulation Portion>

The configuration of the light-modulation portion 30 arranged on the flexible transparent substrate 10 is not particularly limited as long as it includes the light-modulation layer 31, and the light-modulation portion 30 may be configured such that the optical characteristics of the light-modulation layer 31 can be reversibly changed by hydrogenation or dehydrogenation.

<Light-Modulation Layer>

The light-modulation layer 31 includes a light-modulation material whose state is reversibly changed between a transparent state during hydrogenation and a light-shielding state (light-reflective state or light-absorption state) during dehydrogenation. The light-modulation material may be either a reflection-type light-modulation material or an absorption-type light-modulation material. The reflection-type light-modulation material is a material whose state is reversibly changed between a transparent state by hydrogenation and a light-reflective state by dehydrogenation. The absorption-type light-modulation material is a material whose state is reversibly changed between a transparent state by hydrogenation and a colored state (light-absorption state) by dehydrogenation. The light-modulation layer 31 may have a single-layer configuration, or a stacking configuration having two or more layers. The reflection-type light-modulation layer and the absorption-type light-modulation layer may be stacked.

Examples of light-modulation material for the reflection-type light-modulation layer include rare earth metals such as Y, La, Gd and Sm, alloys of a rare earth metal and magnesium, alloys of an alkaline earth metal such as Ca, Sr or Ba and magnesium, and alloys of a transition metal such as Ni, Mn, Co or Fe and magnesium. Magnesium alloys are preferable for the reflection-type light-modulation material for securing excellent transparency in hydrogenation state. From the viewpoint of securing both transparency and durability, alloys of rare earth metal element and magnesium are preferable, and Mg-Y alloy is especially preferable. Magnesium is transformed into transparent $MgH_2$ when hydrogenated, and is transformed back into Mg with a metallic reflection when dehydrogenated.

The light-modulation material for the absorption-type light-modulation layer is preferably a transition metal oxide. In particular, the light-modulation material is preferably a transition metal oxide including one or more materials selected from tungsten oxide, molybdenum oxide, chromium oxide, cobalt oxide, nickel oxide and titanium oxide, especially preferably tungsten oxide because the light absorption ratio during dehydrogenation is high.

The thickness of the light-modulation layer 31 is not particularly limited, and may be selected according to the required degree of light transmission and the like. For example, the thickness of the reflection-type light-modulation layer is preferably about 10 to 200 $\mu$m, more preferably 20 to 150 $\mu$m, further preferably 30 to 100 $\mu$m. The thickness of the absorption-type light-modulation layer is preferably 100 to 1500 nm, more preferably 200 to 1000 nm, further preferably 300 to 800 nm. When the light-modulation layer 31 is a laminate of a plurality of light-modulation layers, the thickness of each light-modulation layer is preferably in the above-described range.

<Catalyst Layer>

Preferably, the light-modulation substrate 1 includes a catalyst layer 32 on the light-modulation layer 31 (on the counter substrate 5 side) for promoting hydrogenation and dehydrogenation of the light-modulation layer 31. The switching speed in switching from the light-shielding state to the transparent state by hydrogenation of the light-modulation layer 31 and switching from the transparent state to the light-shielding state by dehydrogenation is increased by disposing the catalyst layer 32 on the light-modulation layer 31.

The material of the catalyst layer 32 is not particularly limited as long as the catalyst layer 32 has a function of promoting hydrogenation and dehydrogenation of the light-modulation layer 31, and for example, it is preferable that catalyst layer 32 includes at least one metal selected from palladium, platinum, a palladium alloy and a platinum alloy. In particular, palladium is preferably used because it has high hydrogen permeability.

The thickness of the catalyst layer 32 is not particularly limited, and when the thickness is excessively large, the catalyst layer 32 tends to acts as a light-shielding (light reflecting) layer, leading to reduction of the light transmittance of the light-modulation portion of the light-modulation layer 31 in a hydrogenated state. Thus, the thickness of the catalyst layer 32 is preferably 30 nm or less, more preferably 20 nm or less, further preferably 10 nm or less. From the viewpoint of increasing the switching speed, the thickness of the catalyst layer 32 is preferably 2 nm or more.

<Formation of Light-Modulation Layer and Catalyst Layer>

The method for forming the light-modulation layer 31 and the catalyst layer 32 is not particularly limited, and any methods such as sputtering method, a vacuum vapor deposition method, an electron beam vapor deposition method, a chemical vapor deposition (CVD) method, a chemical bath deposition (CBD) method, a plating method and a sol-gel method can be employed.

Among them, a sputtering method is preferable because a uniform and dense film can be deposited. Particularly, when a roll-to-roll sputtering apparatus is used, and deposition is performed while a long flexible transparent substrate is continuously conveyed along the longitudinal direction, productivity of the light-modulation substrate can be improved. In roll-to-roll sputtering, the light-modulation layer 31 and the catalyst layer 32 can be successively deposited in one film conveyance when a plurality of cathodes are arranged along the circumferential direction of one deposition roll, or a sputtering apparatus including a plurality of deposition rolls is employed. By successively depositing the light-modulation layer 31 and the catalyst layer 32, productivity can be improved, and degradation of the light-modulation layer due to oxidation can be suppressed because the catalyst layer 32 is deposited before the deposition surface of the light-modulation layer 31 is exposed to an oxidizing atmosphere.

It is preferable that after the sputtering apparatus is loaded with a roll-shaped flexible transparent substrate and before sputtering deposition is started, the inside of the sputtering apparatus is evacuated to remove moisture, and impurities such as moisture and organic gases generated from the flexible transparent substrate. By removing gases in the apparatus and the substrate in advance, oxidation due to incorporation of oxygen and moisture into the light-modulation layer 31 can be suppressed. The degree of vacuum (ultimate vacuum) in the sputtering apparatus before starting of sputtering deposition is, for example, $1 \times 10^{-2}$ Pa or less, preferably $5 \times 10^{-3}$ Pa or less, more preferably $1 \times 10^{-3}$ Pa or less, further preferably $5 \times 10^{-4}$ Pa or less, especially preferably $5 \times 10^{-5}$ Pa or less.

A metal target is used in deposition of a metal thin-film such as magnesium alloy as the light-modulation layer 31 on the flexible transparent substrate 10. When an alloy layer is deposited as the light-modulation layer, an alloy target may be used, or a plurality of metal targets may be used. In addition, an alloy layer may also be formed using a target (split target) in which a plurality of metal plates are arranged and bonded on a backing plate in such a manner that an erosion portion has a predetermined area ratio. When a plurality of metal targets are used, an alloy layer having a desired composition can be formed by adjusting an electric power applied to each target. The light-modulation layer is deposited while an inert gas is introduced.

An oxidized region may be formed in the light-modulation layer 31 at an interface with the flexible transparent substrate 10. Since a metal oxide formed by sputtering easily forms a dense film, the oxidized region formed in the initial stage of deposition of the light-modulation layer 31 has an effect of blocking outgas from the flexible transparent substrate. In other words, since the oxidized region of the light-modulation layer 31 at the interface with the flexible transparent substrate 10 functions as a sacrificial layer, oxidation of the light-modulation layer on the catalyst layer 32-side can be suppressed to maintain high light-modulation performance.

When the light-modulation layer 31 is a metal thin-film, it is preferable that the oxygen content in the vicinity of an interface on the catalyst layer 32-side is as small as possible. Specifically, the oxygen content within a range of 5 nm from an interface of the light-modulation layer 31 on the catalyst layer 32-side is preferably less than 50 atom%, more preferably 45 atom% or less, further preferably 40 atom% or less. When the oxygen content at an interface of the light-modulation layer 31 on the catalyst layer 32-side is in the above-mentioned range, movement of hydrogen between the catalyst layer 32 and the light-modulation layer 31 is promoted, so that a light-modulation substrate having favorable light-modulation performance is obtained. In addition, as the oxygen content at an interface of the light-modulation layer 31 on the catalyst layer-32 side decreases, deterioration due to repetition of switching is reduced, so that a light-modulation element excellent in durability in long-term use is obtained. As described later, for preventing oxidation of the light-modulation layer 31, an underlayer may be disposed on a flexible transparent substrate, followed by depositing a light-modulation layer thereon.

A metal target is used for deposition of the catalyst layer 32 on the light-modulation layer 31. The conditions for sputtering deposition of the catalyst layer are not particularly limited, and may be similar to or different from the conditions for deposition of the light-modulation layer 31.

The arithmetic mean roughness of the surface of the catalyst layer 32 is preferably 30 nm or less, more preferably 20 nm or less, further preferably 15 nm or less. By reducing the arithmetic mean roughness of the catalyst layer 32, deterioration of light-modulation performance in repetition of a hydrogenation and dehydrogenation cycles tends to be suppressed, leading to improvement of durability. In particular, as described later, when a surface layer is disposed on the catalyst layer 32, reduction of the surface roughness of the catalyst layer 32 tends to improve the durability of the light-modulation element because the surface of the catalyst layer is uniformly covered even when the surface layer is formed by wet coating.

In the light-modulation element of the present invention, the spacer 61 is disposed between the light-modulation portion of the light-modulation substrate 1 and the counter substrate 5, and therefore blocking between the light-modulation portion 30 and the substrate 10 can be suppressed to secure a space on the light-modulation portion 30 for supplying and discharging a gas. Thus, it is not necessary to secure a gas supply passage by increasing the surface roughness of the light-modulation portion 30. Therefore, in the light-modulation element of the present invention, blocking of the light-modulation portion can be suppressed by disposing spacers while reducing the arithmetic mean roughness of each of the catalyst layer and the surface layer formed thereon to enhance the durability of the light-modulation element.

For reducing the arithmetic mean roughness of the catalyst layer 32, it is preferable to reduce surface irregularities of the light-modulation layer 31 which is an underlying base for the catalyst layer 32. For example, surface irregularities of the light-modulation layer 31 tend to be reduced by decreasing the pressure during sputtering deposition of the light-modulation layer 31. When the light-modulation layer 31 is deposited by a dry process such as a sputtering method, the surface irregularities tend to increase as the deposition thickness becomes larger.

The surface shape of the flexible transparent substrate 10 serving as a deposition base for the light-modulation layer 31 affects the surface shape of the catalyst layer 32. When the smoothness of the flexible transparent substrate 10 is enhanced, the arithmetic mean roughness of the light-modulation layer 31 tends to decrease, and arithmetic mean roughness of the catalyst layer 32 accordingly tends to decrease. Thus, the arithmetic mean roughness Ra of a light-modulation portion 30-formed surface of the flexible transparent substrate 10 is preferably 10 nm or less, more preferably 5 nm or less, further preferably 3 nm or less, especially preferably 1 nm or less. The arithmetic mean roughness is calculated based on a roughness curve extracted from a three-dimensional surface shape measured by vertical scanning low coherence interferometry (ISO25178).

<Other Additional Layers>

The light-modulation portion 30 may include functional layers other than the light-modulation layer 31 and the catalyst layer 32. For example, the light-modulation portion 30 may have an underlayer on a surface of the light-modulation layer 31 on the flexible transparent substrate 10 side. A buffer layer may be disposed between the light-modulation layer 31 and the catalyst layer 32. A surface layer may be disposed on a surface of the catalyst layer 32 on the counter substrate 5-side.

(Underlayer)

When an underlayer is disposed on the flexible transparent substrate 10, oxidation of the light-modulation layer 31 may be suppressed during deposition of the light-modulation layer 31 on the underlayer. In particular, when the flexible transparent substrate 10 is a plastic film substrate, by disposing an inorganic oxide layer as the underlayer on the plastic film substrate, outgas from the plastic film substrate can be blocked to suppress oxidation of the light-modulation layer 31.

As the inorganic oxide of the underlayer, oxides of metal or semimetal elements such as Si, Ge, Sn, Pb, Al, Ga, In, Tl, As, Sb, Bi, Se, Te, Mg, Ca, Sr, Ba, Sc, Y, Ti, Zr, Hf, V, Nb, Ta, Cr, Mo, W, Mn, Tc, Re, Fe, Ru, Os, Co, Rh, Ir, Ni, Pd, Pt, Cu, Ag, Au, Zn and Cd are preferably used. The inorganic oxide layer may contain a mixed oxide of plurality of (semi)metals. Among them, an oxide of Si, Nb, Ti or the like is preferable because it absorbs little light, and is excellent in gas barrier property against oxygen, water vapor and the like.

For imparting barrier property against a gas from the flexible transparent substrate, the thickness of the underlayer is preferably 1 nm or more. On the other hand, when the thickness of the underlayer is excessively large, the light transmittance tends to be reduced due to light absorption by an inorganic oxide, etc. which form the underlayer. Therefore, the thickness of the underlayer is preferably 200 nm or less.

Method for forming the underlayer is not particularly limited. When an underlayer of an inorganic oxide is deposited by a sputtering method, a metal target or an oxide target is used. When a metal target is used, sputtering deposition is performed while in addition to an inert gas such as argon, a reactive gas (*e.g.*, oxygen) is introduced. When an oxide target is used, deposition is performed while an inert gas such as argon is introduced. When an oxide target is used, a reactive gas in addition to an inert gas may be introduced as necessary.

(Buffer Layer)

By disposing a buffer layer between the light-modulation layer 31 and the catalyst layer 32, mutual diffusion of a light-modulation layer component and a catalyst layer component can be suppressed. It is preferable that the buffer layer disposed between the light-modulation layer 31 and the catalyst layer 32 is permeable to hydrogen. The buffer layer may include only one layer, or a plurality of layers. For example, the buffer layer may have a stacked structure of a layer having a function of suppressing migration of a metal from the light-modulation layer 31 and a layer suppressing passage of oxygen from the catalyst layer 32-side to the light-modulation layer 31.

When a metal thin-film consisting of Ti, Nb, V, an alloy of these metals, etc. is disposed as the buffer layer between the light-modulation layer 31 and the catalyst layer 32, the switching speed from the transparent state to the reflective/absorption state in dehydrogenation tends to increase while migration of metals etc. from the light-modulation layer and the catalyst layer is suppressed.

When a metal thin-film including W, Ta, Hf, an alloy of these metals, etc. is disposed as the buffer layer, passage of oxygen to the light-modulation layer 31 from the catalyst layer 32-side can be suppressed to inhibit degradation of the light-modulation layer by oxidation. In addition, when a metal thin-film including a metallic material similar to that in the light-modulation layer is inserted as the buffer layer, the layer functions as a sacrificial layer which reacts with oxygen passing through the catalyst layer 32, so that oxidation of the light-modulation layer 31 can be suppressed. Preferably, the buffer layer acting as such a sacrificial layer is reversibly bonded with oxygen, and hydrogenated in hydrogenation of the light-modulation layer 31 (transparent state), so that the light transmittance increases.

The thickness of the buffer layer can be appropriately set according to its purpose and so on, and is not particularly limited. The thickness is, for example, 1 to 200 nm, and is preferably 1 to 30 nm. The method for forming the buffer layer is not particularly limited, and a sputtering method, a vacuum vapor deposition method, an electron beam vapor deposition method, a chemical vapor deposition method or the like can be employed. When the light-modulation layer 31 and the catalyst layer 32 are deposited by roll-to-roll sputtering, it is preferable that the buffer layer is also deposited by roll-to-roll sputtering.

(Surface Layer)

A surface layer may be disposed on the catalyst layer 32. By disposing the surface layer, permeation of water and oxygen can be blocked to prevent degradation of the catalyst layer 32 and the light-modulation layer 31. In addition, by adjusting refractive index and optical thickness of the surface layer, light reflection at a surface of the light-modulation substrate can be reduced to increase the light transmittance in the transparent state.

It suffices that a material of the surface layer is permeable to hydrogen and can block a substance such as water and oxygen that may cause oxidation of the light-modulation layer. As the material of the surface layer, oxides of metal or semimetal elements such as Si, Ge, Sn, Pb, Al, Ga, In, Tl, As, Sb, Bi, Se, Te, Mg, Ca, Sr, Ba, Sc, Y, Ti, Zr, Hf, V, Nb, Ta, Cr, Mo, W, Mn, Tc, Re, Fe, Ru, Os, Co, Rh, Ir, Ni, Pd, Pt, Cu, Ag, Au, Zn and Cd may be used. As a material of the surface layer, an organic material such as a polymer, an organic-inorganic hybrid material, or the like may also be used. Examples of the polymer include polymers such as polytetrafluoroethylene, polyvinyl acetate, polyvinyl chloride, polystyrene and cellulose acetate.

The thickness of the surface layer can be appropriately set according to its purpose and so on, and is not particularly limited, and the thickness of the surface layer is, for example, about 10 nm to 300 nm. When the thickness of the surface layer is excessively large, permeation of hydrogen may be blocked, leading to deterioration of light-modulation performance and the switching speed, and therefore the thickness of the surface layer is more preferably 200 nm or less, further preferably 150 nm or less, especially preferably 100 nm or less. The surface layer may include only one layer, or a plurality of layers. For example, when a plurality of thin-films having different refractive indices are stacked, and the optical thickness of each layer is adjusted, antireflection performance can be improved to increase the light transmittance in the transparent state. In addition, durability can also be improved by combining an organic layer and an inorganic layer.

The surface layer may be deposited by a dry process such as a sputtering method, or deposited by a wet method such as spin coating, dip coating, gravure coating or die coating. When the surface layer is formed of an organic material such as a polymer, an organic-inorganic hybrid material, a sol-gel material or the like, it is preferable that the surface layer is deposited by a wet method such as spin coating, dip coating, gravure coating or die coating.

[Counter substrate]

When the counter substrate 5 is disposed so as to face the light-modulation portion 30 of the light-modulation substrate 1, a gap is formed between the light-modulation portion 30 and the counter substrate 5. By supplying a gas such as hydrogen to the gap and discharging the gas from the gap, the light-modulation layer of the light-modulation portion 30 is hydrogenated and dehydrogenated, resulting in occurrence of switching between the transparent state and the reflection or absorption state of the light-modulation element. In the light-modulation element 100 shown in FIG. 1, the counter substrate 5 includes a plurality of dot-shaped spacers 61 on the transparent substrate 50.

<Transparent Substrate>

The transparent substrate 50 of the counter substrate 5 may be a rigid substrate or a flexible substrate. Use of a flexible substrate as the transparent substrate 50 (*i.e.,* use of flexible substrates as the light-modulation substrate 1 and the counter substrate 5) contributes to downsizing, weight reduction and flexibility improvement of the light-modulation element. The visible light transmittance of the transparent substrate 50 is preferably 80% or more, more preferably 85% or more, further preferably 90% or more. As the material for the transparent substrate 50, the same transparent material as the flexible transparent substrate 10 of the light-modulation substrate 1 can be used.

<Spacer>

A plurality of dot-shaped spacers 61 are arranged on the transparent substrate 50. Since the spacer 61 is arranged between the light-modulation portion 30 of the light-modulation substrate 1 and the transparent substrate 50, the distance between the light-modulation portion 30 and the transparent substrate 50 can be kept constant to secure a gas-filling space 8 on the light-modulation portion 30. Thus, hindrance of light-modulation due to blocking of the light-modulation portion is unlikely to occur, so that in-plane uniformity of light-modulation properties (light transmission amount) is enhanced. The material for the spacer 61 is not particularly limited as long as it is transparent, and various transparent resins, glass and the like are used. The material for the spacer 61 may be identical to or different from that for the transparent substrate 50. The spacer 61 may have adhesive property.

The spacer arrangement interval may be random or periodic. The periodic arrangement may be a grid arrangement or a staggered arrangement. When the distance between adjacent spacers is excessively large, the transparent substrate 50 and the light-modulation portion 30 are likely to come into contact with each other at a place distant from the spacer, so that light-modulation may be hindered due to blocking. Thus, the spacer arrangement interval L is preferably 8 mm or more, more preferably 10 mm or more, further preferably 15 mm or more, especially preferably 20 mm or more. On the other hand, when the spacer arrangement interval is excessively small, the amount of light refracted/scattered by the spacers is large, so that transmitted light and reflected light may be visually turbid, leading to deterioration of the visibility. Thus, the spacer arrangement interval L is preferably 120 mm or less, more preferably 100 mm or less, further preferably 70 mm or less, especially preferably 50 mm or less.

From the viewpoint of setting the spacer arrangement interval within an appropriate range to suppress hindrance of light-modulation due to blocking, the number density of spacers is preferably 70 pieces/$m^2$ or more, more preferably 100 pieces/$m^2$ or more, further preferably 300 pieces/$m^2$ or more, especially preferably 400 pieces/$m^2$ or more. On the other hand, from the viewpoint of suppressing deterioration of visibility (transparency) due to refraction/scattering of light by the spacer, the number density of spacers is preferably 15000 pieces/$m^2$ or less, more preferably 1000 pieces/$m^2$ or less, further preferably 5000 pieces/$m^2$ or less, especially preferably 2000 pieces/$m^2$ or less. When the spacer arrangement interval is non-periodic, the arrangement interval L may be determined on the assumption that the spacers are arranged in a grid pattern with the same number density. Specifically, the arrangement interval L can be calculated from the number density N of spacers in accordance with the following expression.

$$L = (1/N)^{1/2}$$

For keeping constant the distance between the light-modulation portion 30 and the transparent substrate 50 throughout the surface of the light-modulation element and suppressing deterioration of the visibility due to refraction or scattering of transmitted light and reflected light, the area of a spacer installation region is preferably 2 to 3000 ppm, more preferably 3 to 1000 ppm, further preferably 5 to 500 ppm, especially preferably 8 to 100 ppm, most preferably 10 to 100 ppm of the area of the light-modulation element. The area of the spacer installation region is the projected area of spacers on the substrate surface. The area of the light-modulation element is an area of a region where light-modulation is possible. When spacers are arranged in a grid pattern, the area ratio S of the spacer installation region can be calculated in accordance with the following expression.

$$S\ (\%) = 100 \times \pi(D/2)^2/L^2$$

For securing the gas-filling space, the height H of the spacer 61 is preferably 20 $\mu$m or more, more preferably 30 $\mu$m or more, further preferably 40 $\mu$m or more, especially preferably 50 $\mu$m or more. In addition, by increasing the spacer height, hindrance of light-modulation by blocking of the light-modulation portion. On the other hand, when the spacer height is excessively large, the volume of the gas-filling space tends to increase, leading to reduction of the switching speed. This tendency is marked particularly at the time of supplying hydrogen to the gas-filling space to hydrogenate the light-modulation layer (make the light-modulation layer transparent). Thus, the spacer height H is preferably 5000 $\mu$m or less, more preferably 1000 $\mu$m or less, further preferably 500 $\mu$m or less, especially preferably 200 $\mu$m or less.

A plurality of spacers may have the same height or different heights. When the spacers do not have the same height, the average spacer height is preferably in the above-described range. For making the in-plane light-modulation properties uniform, it is preferable that the spacers 61 have the same height. The coefficient of variation of the height H of the spacer 61 (standard deviation divided by the number average) is preferably 0.3 or less, more preferably 0.2 or less, further preferably 0.1 or less.

The shape of the spacer 61 is not particularly limited, and may be a hemispherical shape, a spherical shape, a cylindrical shape, a conical shape, a prismatic shape, a pyramidal shape or the like. From the viewpoint of preventing damage to the light-modulation portion and formation of pinholes due to contact with the spacer 61, it is preferable that the spacer 61 has a planar shape or curved surface shape at a part which is in contact with the light-modulation portion 30.

Since light is refracted at the interface between the spacer 61 and the gas-filling space 8 (solid-gas interface), the spacer 61 acts like a lens. If the size of each spacer 61 is excessively large, the spacers may be easily viewed due to refraction of transmitted light or reflected light, leading to impairment of the visibility of the light-modulation element. Thus, the diameter D of the spacer 61 is preferably 1 mm or less, more preferably 500 $\mu$m or less, further preferably 300 $\mu$m or less. From the viewpoint of securing formability of the spacer and the spacer height H, the diameter D is preferably 30 $\mu$m or more, more preferably 50 $\mu$m or more, further preferably 100 $\mu$m or more, especially preferably 150 $\mu$m or more. When the shape of the spacer 61 in plan view is not a circular shape, the diameter D is defined by the diameter of a circle having an area equal to the projected area (projected area circle equivalent diameter).

The aspect ratio (ratio of height H to diameter D: H/D) of the spacer 61 is preferably about 0.05 to 10, more preferably 0.1 to 5, further preferably 0.2 to 1, especially preferably 0.25 to 0.7.

The method for forming the spacer 61 on the transparent substrate 50 is not particularly limited. For the spacers to have a constant shape and arrangement, it is preferable that spacers are formed on a transparent substrate by any of various printing methods such as an inkjet method, a screen printing method, a relief printing method, an offset printing method, a gravure printing method, a microcontact printing method and an imprint method. The transparent substrate 50 and the spacer 61 may be integrally formed. For example, a substrate having projections as spacers on the surface can be formed by an imprint method, press molding, dry etching, wet etching or the like.

[Light-Modulation Element]

Alight-modulation element is formed by arranging the light-modulation substrate 1 and the counter substrate 5 in such a manner that the light-modulation portion 30 faces the spacer 61. Presence of the spacer 61 leads to formation of the gas-filling space 8 between the light-modulation portion 30 and the transparent substrate 50. By supplying hydrogen etc. to the space and discharging the hydrogen etc. from the space, switching is performed between the transparent state and the reflection or absorption state.

It is preferable that the light-modulation substrate 1 and the counter substrate are fixed to each other by a sealing member 85. It suffices that the sealing member can fix the light-modulation substrate and the counter substrate, and the sealing member may be any types of adhesives, tape members and the like. By arranging the sealing member at the end of the light-modulation element, the positional relationship between the light-modulation substrate and the counter substrate is fixed in a state where the spacer 61 is in contact with the surface of the light-modulation portion 30, so the volume of the gas-filling space can be kept constant. In addition, the end of the gas-filling space can be sealed by arranging the sealing member. In the light-modulation element 100, the volume of the gas-filling space formed between the two substrates is small, and the amount of gas required for hydrogenation and dehydrogenation is very small. Therefore, even if the gas supplied to the gas-filling space 8 leaks from the gap between the substrates, the leakage amount is very small such that no particular problem occurs. Accordingly, the sealing member 85 does not need to completely seal the light-modulation substrate 1 and the counter substrate 5.

The gas-filling space 8 is spatially connected to an atmosphere control device 86. The atmosphere control device 86 is configured such that gas such as hydrogen and oxygen can be supplied to and discharged from the gas-filling space 8. When a gas containing hydrogen is supplied from the atmosphere control device 86 to the gas-filling space 8, the light-modulation layer 31 is hydrogenated through the catalyst layer 32 to turn into a transparent state. When an oxygen gas or air is supplied from the atmosphere control device 86 to the gas-filling space 8, the light-modulation layer 31 is dehydrogenated through the catalyst layer 32 to turn into a reflective/absorption state. Thus, by supplying a gas to and discharging a gas from the atmosphere control device 86, the atmosphere in the gas-filling space 8 can be controlled to reversibly switch between the transparent state and the light-shielding state.

The atmosphere control device 86 can be configured such that electrolysis of water is performed to supply hydrogen and oxygen, and the gas in the gas-filling space 8 is discharged to the outside using a vacuum pump. In the light-modulation element 100, hydrogen obtained by electrolysis of water in the air can be supplied to the gas-filling space to hydrogenate the light-modulation layer because the gas-filling space has a small volume, and only a slight amount of hydrogen is needed for hydrogenation.

In dehydrogenation, a hydrogen-free gas may be supplied from the atmosphere control device 86 to the gas-filling space 8 to forcibly remove hydrogen in the gas-filling space. Examples of the gas supplied to the gas-filling space 8 in dehydrogenation include oxygen, oxygen-containing gases such as air, and inert gases such as nitrogen and rare gases. When an oxygen-containing gas is supplied, hydrogen in the gas-filling space reacts with oxygen to produce water, so that it is possible to improve the speed of dehydrogenation of the light-modulation layer.

Dehydrogenation may be performed by decompressing the gas-filling space 8 with a vacuum pump or the like to discharge hydrogen. Dehydrogenation may be performed by combination of discharge with a vacuum pump or the like and supply of an oxygen-containing gas or the like. When an oxygen-containing gas or the like is supplied after a hydrogen-containing in the gas-filling space 8 is discharged, dehydrogenation efficiency tends to be improved, leading to enhancement of the switching speed. In addition, by discharging a hydrogen-containing gas in advance, the amount of water produced by the reaction with hydrogen during supply of an oxygen-containing gas decreases, so that degradation of the light-modulation layer and the like can be prevented. An oxygen-containing gas or the like may be supplied into the gas-filling space 8 to perform dehydrogenation, followed by discharging the gas for the purpose of removing produced water and the like.

Since the substrate 10 is flexible, the light-modulation portion 30 and the transparent substrate 50 may come into contact with each other when the gas-filling space 8 is brought into a reduced-pressure atmosphere. Even in such a case, since the spacers 61 are provided, the light-modulation portion 30 and the transparent substrate 50 are brought into a noncontact state when the gas-filling space 8 is supplied with a gas to return to a normal pressure (atmospheric pressure). Thus, blocking between the light-modulation portion 30 and the transparent substrate 50 is unlikely to occur, so that hindrance of light-modulation is suppressed.

While FIG. 1 shows a configuration in which the atmosphere control device 86 and the gas-filling space 8 are spatially connected to each other through an opening formed in the counter substrate 5, an opening may be formed in the light-modulation substrate 1. In addition, an opening may be formed in the lateral surface of the substrate or in a sealing member at the end of the substrate to connect the atmosphere control device to the gas-filling space. A plurality of atmosphere control devices may be connected to the gas-filling space of the light-modulation element. The atmosphere control devices may each include an air supply unit for supplying a hydrogen-containing gas or an oxygen-containing gas, and a decompression unit such as a vacuum pump. The air supply unit may be a first supply unit for supplying a hydrogen-containing gas to the gas-filling space during hydrogenation, and a second gas supply unit for supplying a gas for dehydrogenation (oxygen-containing gas etc.).

[Other Embodiments]

As the light-modulation element 100 shown in FIG. 1, an embodiment has been described in which the transparent substrate 10 that forms the light-modulation substrate 1 is flexible, and the spacers 61 are fixed on the transparent substrate 50 that forms the counter substrate 5. The light-modulation element of the present invention may be a light-modulation element in which any one of the light-modulation substrate and the counter substrate is flexible, and dot-shaped spacers are arranged between the light-modulation portion of the light-modulation substrate and the counter substrate.

In the case of a light-modulation element in which one or both of the transparent substrates are flexible, blocking may occur between the light-modulation portion and the counter substrate when the light-modulation substrate is in contact with the counter substrate. In particular, when the gas-filling space is decompressed in switching, blocking is likely to occur. When blocking occurs, the surface of the light-modulation portion cannot come into contact with the atmospheric gas, and therefore light-modulation is hindered, so that light-modulation properties are non-uniform. On the other hand, by disposing dot-shaped spacers with a specific height H between the light-modulation portion of the light-modulation substrate and the counter substrate, hindrance of light-modulation due to blocking can be suppressed.

While in the light-modulation element 100 shown in FIG. 1, dot-shaped spacers 61 are arranged on the transparent substrate 50 of the counter substrate 5, the dot-shaped spacers may be arranged on the surface of the light-modulation portion. The dot-shaped spacers may be arranged on both the light-modulation substrate and the counter substrate. The dot-shaped spacers are not required to be fixed on the substrate. When the dot-shaped spacers are fixed on the counter substrate, the contact area between the spacer and the light-modulation portion can be reduced, so that effective regions of the light-modulation portion can be expanded to improve light-modulation performance, and the in-plane uniformity of light-modulation properties can be improved.

The light-modulation portion may be provided on the counter substrate in addition to the light-modulation substrate. For example, one of the light-modulation substrate and the counter substrate has a light-modulation layer formed of a reflection-type light-modulation material, and the other has a light-modulation layer formed of an absorption-type light-modulation material. Combination of the light-modulation materials which block light in different ways enables further improvement of light-shielding efficiency during dehydrogenation.

[Application of Light-Modulation Element]

The light-modulation element of the present invention can be used as it is as a light-modulation member. For example, when one of the substrates is a glass substrate, the light-modulation element can be used as it is as a light-modulation window pane. The light-modulation element may be used in a state of being fixed on a transparent base material such as window pane.

When the light-modulation element is fixed to a transparent substrate, it is preferable to fix the light-modulation element by bonding with an adhesive or an adhesive tape, or pinning for preventing displacement. As fixing means for fixing the light-modulation element, an adhesive is preferable because the fixing area can be increased. As the adhesive, a pressure sensitive adhesive is preferably used. By providing a pressure sensitive adhesive on one surface of the light-modulation element in advance, glass or the like and the light-modulation element can be easily bonded to each other. As the pressure sensitive adhesive, one having excellent transparency, such as an acryl-based pressure sensitive adhesive is preferably used.

The light-modulation element of the present invention can be applied to window panes of buildings and vehicles, shields for the purpose of protecting privacy, various kinds of decorations, lighting equipment, entertainment tools, and the like. Since a flexible substrate is used, the light-modulation element of the present invention is easily processed, and can be applied to a curved surface, resulting in excellent versatility.

EXAMPLES

Hereinafter, the present invention will be described more in detail by showing examples, but the present invention is not limited to the following examples.

[Formation of Light-Modulation Substrate]

A roll of a 188 μm-thick polyethylene terephthalate (PET) film (manufactured by Mitsubishi Chemical Corporation) was set in a roll-to-roll sputtering apparatus, and the inside of a sputtering apparatus was evacuated until the ultimate vacuum degree reached $5 \times 10^{-3}$ Pa. The PET film substrate was conveyed in the sputtering apparatus without introducing a sputtering gas to perform degassing of the PET film.

Thereafter, argon gas was introduced into the sputtering apparatus, a light-modulation layer formed of Mg-Y alloy and a catalyst layer formed of Pd were sequentially deposited on a deposition roll, while the PET film was conveyed at a conveyance speed of 1 m/minute. The Mg-Y alloy layer was deposited using an Mg-Y split target (manufactured by RARE METALLIC Co., Ltd.) having an Mg metal plate and a Y metal plate at an erosion portion area ratio of 2 : 5, under power density of 2000 mW/cm$^2$ and pressure of 0.2 Pa. The Pd layer was deposited using a Pd metal target (manufactured by Tanaka Kikinzoku Kogyo) under power density of 300 mW/cm$^2$ and pressure of 0.4 Pa. The Mg-Y alloy layer had a thickness of 40 nm, the Pd layer had a hickness of 7 nm, and the Pd layer had an arithmetic mean roughness of 9.1 nm.

A titanium alkoxide solution was applied onto the Pd layer by spin coating, and a titanium oxide thin-film (surface layer) having a thickness of 50 nm was formed by a sol-gel method.

[Preparation of Counter substrate]

Spacers were formed on a 188 μm-thick PET film by screen printing. The spacers were arranged in a grid pattern, and the size of the spacers (projection radius D and height H) and the interval L between adjacent spacers were as shown in Table 1. In the Comparative Example, spacers were not formed, and a PET film was used as it was as a counter substrate.

[Preparation of Light-Modulation Element]

The light-modulation substrate and the counter substrate were each cut to a size of 50 mm × 100 mm, and superposed in such a manner that the surface layer of the light-modulation substrate and the dot-shaped spacer of the counter substrate were in contact with each other. The light-modulation substrate and the counter substrate were bonded together at four sides with a pressure sensitive adhesive tape. A needle was inserted at areas (lateral surfaces) where the substrates are bonded together with the pressure sensitive adhesive tape, so that it was possible to introduce a gas into the gas-filling space (space between the light-modulation substrate and the counter substrate).

[Evaluation]

(Thickness and Surface Shape)

The thickness of each of the Mg-Y layer (light-modulation layer) and the Pd layer (catalyst layer) was determined from a TEM image of a cross-section. A three-dimensional surface shape of the light-modulation film before formation of the antireflection layer was measured under the conditions of object lens magnification: 10 times, zoom lens magnification: 20 times and measurement area: 0.35 mm × 0.26 mm with a coherence scanning interferometer (Zygo NewView 7300). From the obtained three-dimensional surface shape, a roughness curve was extracted, and the arithmetic mean roughness Ra of the Pd layer surface was calculated in accordance with JIS B0601. In the analysis, a program installed in the apparatus was used to make corrections under the following conditions.

Removed: None
Filter: High Pass
Filter Type: Gauss Spline
Low wavelength: 300 μm
Remove spikes: on
Spike Height (xRMS): 2.5

(Light-Modulation Performance)

The light-modulation element was placed on a trace table in a dark room, a hydrogen gas diluted to 1% by volume was fed from a mass flow controller to the gas-filling space of the light-modulation element at 75 sccm for 60 seconds, and a state was visually observed in which the light-modulation element was made transparent by hydrogenation of the light-modulation layer. A light-modulation element which was uniformly transparent on the entire area was rated A, a light-modulation element locally having non-transparent areas was rated B, and a light-modulation element having non-transparent areas in a large part of the element was rated NG.

(Switching Time)

For measurement of light transmittance of the light-modulation element, the light-modulation element is arranged between a light emitting diode (EL-1KL3 (peak wavelength: about 940 nm) manufactured by KODENSHI CORP.) as a light source and a photodiode (SP-1ML manufactured by KODENSHI CORP.) as a light receiving element. It should be noted there is almost no difference between transmittances of the light-modulation element at a wavelength of 940 nm and at a wavelength of 750 nm which corresponds to a visible light region.

A hydrogen gas diluted to 1% by volume was fed from a mass flow controller to the gas-filling space of the light-modulation element at 75 sccm. The light transmittance of the light-modulation element was measured at intervals of 10 seconds, and the time until the light transmittance reached 35% or more after introduction of the hydrogen gas was started was defined as a switching time for attainment of transparency. Thereafter, the introduction of the hydrogen gas was stopped, air was allowed to flow from the gap between the two glass plates, and the time until the light transmittance was 10% or less was defined as a switching time for mirror surface formation.

(Appearance of Light-Modulation Element)

A hydrogen gas was fed into the gas-filling space of the light-modulation element to make the light-modulation element transparent, and the light-modulation element was visually observed at a distance of 3m therefrom. A light-modulation element which was transparent was rated A, and a light-modulation element which was visually turbid was rated B.

Table 1 shows the sizes and arrangement intervals of dot-shaped spacers in the light-modulation elements, and the evaluation results.

Table 1

| | Spacer | | | | | Light-modulation performance | Evaluation | | Appearance |
|---|---|---|---|---|---|---|---|---|---|
| | Height H | Diameter D | Interval L | Number density | Area ratio | | Switching time (second) | | |
| | | | | | | | Transparent | Mirror | |
| | μm | μm | mm | Pieces / m² | ppm | | | | |
| Element 1 | 30 | 100 | 25 | 1600 | 13 | A | 30 | 100 | A |
| Element 2 | 40 | 150 | 25 | 1600 | 28 | A | 20 | 100 | A |
| Element 3 | 50 | 200 | 25 | 1600 | 50 | A | 10 | 100 | A |
| Element 4 | 200 | 300 | 25 | 1600 | 113 | A | 10 | 100 | A |
| Element 5 | 1000 | 500 | 25 | 1600 | 314 | A | 40 | 100 | A |
| Element 6 | 5000 | 1000 | 25 | 1600 | 1257 | A | 60 | 100 | A |
| Element 7 | 50 | 200 | 10 | 10000 | 314 | A | 10 | 100 | A |
| Element 8 | 50 | 200 | 20 | 2500 | 79 | A | 10 | 100 | A |
| Element 9 | 50 | 200 | 25 | 1600 | 50 | A | 10 | 100 | A |
| Element 10 | 50 | 200 | 50 | 400 | 13 | A | 10 | 100 | A |
| Element 11 | 50 | 200 | 70 | 204 | 6 | A | 10 | 100 | A |
| Element 12 | 50 | 200 | 100 | 100 | 3 | A | 10 | 100 | A |
| Element 13 | 50 | 200 | 5 | 40000 | 1257 | A | 10 | 100 | B |
| Element 14 | 50 | 200 | 150 | 44 | 1 | B | 10 | 100 | A |
| Comparative Example | | - | | 0 | 0 | NG | - | - | - |

In the Comparative Example where a PET film was used as a counter substrate without forming dot spacers, non-transparent areas existed over the entire surface of the light-modulation element, and it was difficult to say that the light-modulation element had light-modulation performance. Thus, for the element of the comparative example, the switching time and the appearance were not evaluated.

For the Elements 1 to 13, the entire surface of the element was made transparent uniformly by introduction of hydrogen, and good light-modulation performance was exhibited. For the Element 14, non-transparent areas locally existed, but more sufficient light-modulation performance was exhibited as compared to the Comparative Example. These results show that by arranging spacers between the light-modulation layer and the counter substrate, blocking can be prevented, and by adjusting the number density (arrangement interval) of the spacers, a light-modulation element having uniform light-modulation performance can be obtained.

The Element 13 having an increased number density of spacers exhibited good light-modulation performance, but transmitted light was visually turbid in a transparent state. This may be because the density of spacers was high, so that light scattered by the spacers was viewed.

For the Elements 1 to 3, there was a tendency that when the spacer height increased, the time required for attaining transparency was reduced, leading to an increase in switching speed. This may be related to the fact that when the interval between the surface layer of the light-modulation substrate and the counter substrate increased, the volume of the gas-filling space was secured to promote hydrogenation of the light-modulation layer. For the Elements 4 to 6, there was a tendency that when the spacer height increased, the time required for attaining transparency increased, leading to a decrease in switching speed. This may be related to the fact that when the volume of the gas-filling space increased, the time required for replacing a gas in the gas-filling space by hydrogen increased. These results show that by adjusting the height of spacers arranged between the light-modulation substrate and the counter substrate, a light-modulation element with a high switching speed (quick switching is possible) can be obtained.

DESCRIPTION OF REFERENCE CHARACTERS

| | |
|---|---|
| 100 | light-modulation element |
| 1 | light-modulation substrate |
| 10 | flexible transparent substrate |
| 30 | light-modulation portion |
| 31 | light-modulation layer |
| 32 | catalyst layer |
| 5 | counter substrate |
| 50 | transparent substrate |
| 61 | spacer |
| 8 | gas-filling space |
| 81 | sealing member |
| 86 | atmosphere control device |

**Claims**

1. A gas chromic light-modulation element capable of reversibly changing between a transparent state by hydrogenation and a light-shielding state by dehydrogenation,
the gas chromic light-modulation element comprising:

a light-modulation substrate having a light-modulation portion provided on one principal surface of a first transparent substrate, the light-modulation portion including a light-modulation layer capable of reversibly changing light transmittance by hydrogenation and dehydrogenation; and
a second transparent substrate disposed so as to face the light-modulation portion of the light-modulation substrate,
wherein at least one of the first transparent substrate and the second transparent substrate is flexible, and
a plurality of dot-shaped spacers are arranged between the light-modulation portion and the second transparent substrate, and a number density of the spacers is 70 pieces/m$^2$ or more.

2. The gas chromic light-modulation element according to claim 1, wherein the spacers are fixed on the second transparent substrate.

3. The gas chromic light-modulation element according to claim 1 or 2, wherein a height of the spacers is 10 to 5000 $\mu$m.

4. The gas chromic light-modulation element according to any one of claims 1 to 3, wherein a projected area circle equivalent diameter of each of the spacers is 30 to 1000 $\mu$m.

5. The gas chromic gas chromic light-modulation element according to any one of claims 1 to 4, the first transparent substrate is flexible.

6. The gas chromic light-modulation element according to any one of claims 1 to 5, wherein both of the first transparent substrate and the second transparent substrate are flexible.

7. The gas chromic light-modulation element according to any one of claims 1 to 6, wherein the light-modulation portion further includes a catalyst layer which promotes hydrogenation and dehydrogenation of the light-modulation layer.

8. The gas chromic light-modulation element according to any one of claims 1 to 7, wherein the light-modulation layer is a thin-film formed of a metal selected from the group consisting of rare earth metals, alloys of rare earth metals and magnesium, alloys of alkaline earth metals and magnesium, and alloys of transition metals and magnesium.

FIG. 1

## INTERNATIONAL SEARCH REPORT

| International application No. |
| --- |
| PCT/JP2019/010120 |

**A. CLASSIFICATION OF SUBJECT MATTER**
Int.Cl. G02F1/17(2019.01)i

According to International Patent Classification (IPC) or to both national classification and IPC

**B. FIELDS SEARCHED**

Minimum documentation searched (classification system followed by classification symbols)
Int.Cl. G02F1/15-1/19, E06B9/24-9/388

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
Japio-GPG/FX, JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2015-13776 A (PANASONIC CORPORATION) 22 January 2015, paragraphs [0012]-[0031], fig. 1, 2 (Family: none) | 1-8 |
| Y | JP 2017-182062 A (NITTO DENKO CORPORATION) 05 October 2017, paragraphs [0013], [0014] & EP 3435151 A1, paragraphs [0013], [0014] & WO 2017/164285 A1 & TW 201736927 A & CN 108885380 A & KR 10-2018-0122340 A | 1-8 |

☒ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18.04.2019 | 07.05.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/010120 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2015-169716 A (NIPPO LTD.) 28 September 2015, paragraphs [0001], [0019], [0020], fig. 4 (Family: none) | 1-8 |
| A | US 2018/0052376 A1 (CARDINAL CG COMPANY) 22 February 2018, paragraphs [0009], [0023], fig. 1, 4 & WO 2018/035090 A1 | 1-8 |

Form PCT/ISA/210 (continuation of second sheet) (January 2015)

**EP 3 767 385 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013083911 A
- JP 2016218445 A
- JP 2014134676 A